# FASCICULE DE BREVET EUROPEEN

(11) **EP 3 914 046 B1**
(45) Date de publication et mention de la délivrance du brevet: **06.05.2026**
(21) Numéro de dépôt: 21174928.8
(22) Date de dépôt: 20.05.2021
(51) Int. Cl.: H05B 45/40, F21S 4/24, H05B 45/50, H05B 47/105, H05B 47/115, F21S 4/20, H05B 47/155

(54) **SYSTÈME D' ÉCLAIRAGE POUR TUNNEL OU OUVRAGES SIMILAIRES**
BELEUCHTUNGSSYSTEM FÜR EINEN TUNNEL ODER ÄHNLICHE BAUWERKE
LIGHTING SYSTEM FOR TUNNEL OR SIMILAR STRUCTURES

(30) Priorité: 20.05.2020 FR 2005325
(43) Date de publication de la demande: 24.11.2021
(73) Titulaire: FS Tunnel, 94550 Chevilly-Larue (FR)
(72) Inventeur: MERKEZ, Erik, 94550 CHEVILLY-LARUE (FR); LASSIAZ, Marc, 94550 CHEVILLY-LARUE (FR)
(74) Mandataire: Ipsilon

(56) Documents cités:
- EP-A2- 2 894 393
- US-A1- 2014 334 142

## Description

La présente invention concerne un système d'éclairage à diodes LED.

L'utilisation de rubans d'éclairage à diodes LED tend à se développer en raison de leur rendement lumineux et de la facilité de pose.

Un ruban à diodes LED comporte typiquement un circuit imprimé souple portant des diodes LED, disposé à l'intérieur d'une enveloppe souple en matière plastique, transparente au moins dans la zone recouvrant les diodes LED pour permettre à la lumière de sortir.

Les diodes LED sont agencées selon des modules identiques qui se répètent le long du ruban, tous les modules étant alimentés par un bus d'alimentation commun à deux conducteurs électriques, sous la même tension d'alimentation. Le bus d'alimentation s'étend sur toute la longueur du ruban, de façon à permettre de brancher les rubans les uns à la suite des autres.

Classiquement, le ruban est alimenté par une tension redressée double alternance non filtrée, à partir du réseau, ou pour les rubans les plus courts par une tension continue telle que 24V DC.

Les rubans sont généralement installés dans des galeries tels que des tunnels, mais peuvent aussi éclairer des parkings, escaliers, etc....

Un fonctionnement sur une batterie de secours est généralement prévu en cas de coupure du réseau.

La nécessité de maintenir un éclairage de secours pendant une durée suffisante impose généralement l'utilisation de batteries de forte capacité, encombrantes et lourdes.

De plus, dans certaines situations, la zone éclairée est déserte, et n'aurait pas besoin d'être éclairée de manière aussi intense, ce qui permettrait d'économiser de l'énergie.

La demande EP2894393 divulgue un système de panneaux LED pouvant fonctionner en mode d'urgence dans lequel tous les LEDs ne sont pas allumées. Dans le mode de fonctionnement normal, les LEDs sont alimentées par un bus. Dans le mode de fonctionnement d'urgence, les LEDs sont alimentées par un autre « bus d'urgence » séparé, lequel est alimenté par une batterie. Ce bus d'urgence est court-circuité dans le mode de fonction normal.

La demande US2014/334142 décrit un ruban de LED qui peut être coloré. Toutes les LED sont alimentées par le même bus.

L'invention vise à remédier à ces problèmes et a pour objet un système d'éclairage à diodes LED selon la revendication 1, comportant :
- Au moins un ruban d'éclairage à diodes LED, avec au moins un ensemble de modules à diodes LED, les modules d'un ensemble se répartissant en sous-ensembles d'un ou plusieurs modules alimentés par des bus d'alimentation respectifs,
- un système électronique d'alimentation du ruban, permettant de mettre sous tension selon un premier mode de fonctionnement tous les bus d'alimentation et dans un second mode de fonctionnement une partie seulement des bus d'alimentation de manière à réduire la consommation électrique du ruban.

Grâce à l'invention, il est possible de réduire la consommation électrique du ruban tout en produisant de la lumière, ce qui permet d'économiser sur la capacité de la batterie de secours. De plus, dans les autres situations où il n'est pas nécessaire de fournir un éclairage maximal, par exemple en l'absence de personnel sur le site éclairé, la consommation électrique peut être réduite sans pour autant cesser d'éclairer le site pour des raisons de sécurité.

L'ensemble de modules peut comporter un module alimenté par un bus d'alimentation respectif et au moins un autre module alimenté par un autre bus d'alimentation. De préférence, l'ensemble de modules comporte un module alimenté par un bus d'alimentation respectif et tous les autres modules de l'ensemble sont alimentés par un même autre bus d'alimentation. Cela permet de réduire le nombre de conducteurs électriques nécessaires à l'alimentation du ruban. On a par exemple en éclairage réduit 1 module sur 2, 1 module sur 3, 1 module sur 4, voire 1 sur 6 ou 1 sur 8 qui reste allumé, selon le résultat attendu pour l'éclairage réduit ou de « secours ».

Chaque ensemble de modules peut comporter entre 2 et 20 modules, mieux entre 2 et 10 modules, encore mieux entre 2 et 5 modules. Le choix du nombre de modules peut se faire notamment en fonction de la longueur de chaque module, de telle manière que dans le mode de fonctionnement à éclairage réduit, l'espacement entre les modules alimentés le long du ruban produise quand même un éclairage suffisant.

Chaque module comporte par exemple entre 30 et 100 diodes LED. Tous les modules peuvent ne pas être identiques entre eux. Par exemple, le module destiné à être alimenté en permanence peut comporter des diodes LED alimentées avec une puissance électrique bien inférieure à leur puissance nominale, par exemple plus de deux fois moindre, de manière à prolonger la durée de vie des diodes compte-tenu de la permanence de l'alimentation. Les modules peuvent présenter des circuits imprimés différents, le cas échéant. De préférence, le niveau d'éclairage est uniforme entre les modules en éclairage maximal.

Les modules du même ensemble sont de préférence disposés les uns à la suite des autres le long du ruban. La longueur d'un module peut être habituellement comprise entre 25 et 100 cm. Les modules peuvent encore correspondre à des rangées de diodes LED s'étendant le long du ruban. Par exemple, le premier module correspond à une première rangée, et les autres modules aux autres rangées. On peut encore avoir une disposition des modules le long du ruban plus complexe, avec par exemple des circuits imprimés portant plusieurs rangées de diodes LED, un module allumé pendant l'éclairage réduit correspondant à seulement une partie des rangées d'une partie seulement des circuits imprimés.

Le système peut comporter au moins un capteur de présence humaine (via une détection infrarouge, radar ou autre...), et le passage du premier mode de fonctionnement au second et inversement s'effectuant également selon qu'une présence humaine est détectée ou non. Par exemple, le système comporte une balise RFID actif sensible à la proximité d'un badge RFID actif portée par le personnel d'un site, et le changement de mode peut s'effectuer en fonction de la distance à laquelle sont détectées les badges. On peut aussi avoir simplement une horloge, qui commande le passage en éclairage réduit à certaines heures.

Le ruban comporte un connecteur rapide à au moins trois conducteurs, dont un conducteur commun et au moins deux conducteurs spécifiques à des sous-ensembles respectifs de modules.

La description divulgue aussi un ruban d'éclairage pour un système selon l'invention, tel que défini ci-dessus, comportant :
- une enveloppe souple,
- au moins un ensemble de modules à diodes LED disposés à l'intérieur de l'enveloppe souple et se répétant par exemple le long de celle-ci, les modules d'un ensemble se répartissant en sous-ensembles d'un ou plusieurs modules alimentés par N bus d'alimentation respectifs,
- un connecteur ayant au moins N-1 pôles, permettant d'alimenter sélectivement lesdits bus.
L'invention a encore pour objet un procédé d'éclairage d'un ouvrage, notamment d'un tunnel, dans lequel on utilise un système selon l'invention en alimentant de manière simultanée tous les modules à partir du réseau pour éclairer de manière maximale l'ouvrage, et en alimentant seulement une partie d'entre eux en cas de coupure du réseau ou lorsque le besoin en lumière est moindre.

D'autres caractéristiques et avantages de la présente invention ressortiront à la lecture de la description détaillée qui va suivre, d'un exemple de réalisation non limitatif de celle-ci, et à l'examen du dessin annexé, sur lequel
[Fig 1] la figure 1 représente de manière schématique un système d'éclairage selon l'invention ;
[Fig 2] la figure 2 représente de manière schématique en coupe transversale le ruban de la figure 1,
[Fig 3] la figure 3 illustre un ruban dont les modules correspondent à des rangées respectives de diodes LED, et
[Fig 4] la figure 4 illustre un ruban dont les modules allumés en éclairage réduit correspondent à seulement certaines rangées de modules appartenant à des ensembles de modules qui se répètent le long du ruban.

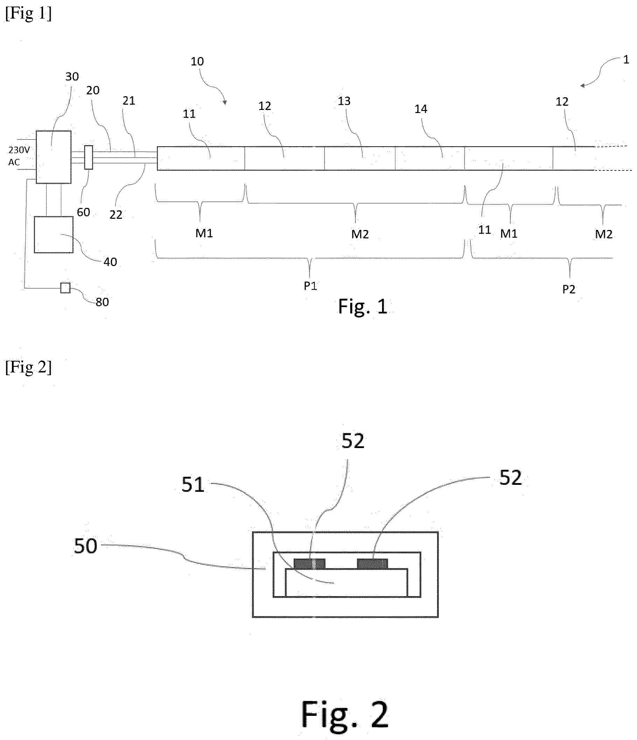

On représente à la figure 1 un système d'éclairage 1 selon l'invention, comportant un ruban 10 destiné à éclairer un tunnel par exemple.

Le ruban 10 comporte, comme on peut le voir sur la figure 2, une enveloppe souple 50, par exemple en silicone, à l'intérieur de laquelle est disposé un circuit imprimé souple 51 portant des diodes LED 52.

Les diodes LED sont agencées selon une succession d'ensembles identiques P1, P2, .... Chaque ensemble Pk de modules, avec k entier compris entre 1 et le nombre total d'ensembles du ruban, comporte au moins deux sous-ensembles de modules M1 et M2.

Dans l'exemple considéré, le sous-ensemble M1 comporte un unique module 11 et le sous-ensemble M2 comporte trois modules 12, 13 et 14.

Tous les modules 11 du ruban sont alimentés par un même bus d'alimentation 20, 21. Ainsi, aux bornes de chacun d'eux, on retrouve la même tension d'alimentation, par exemple environ 200 V DC en tension moyenne, lorsque la tension correspond au redressement double alternance du réseau 230V AC, l'invention n'étant pas limitée à une alimentation particulière.

Tous les autres modules sont alimentés par un autre bus d'alimentation 20, 22, le conducteur 20 étant commun aux deux bus. Ainsi, chacun des modules 12, 13 et 14 reçoit la même tension d'alimentation, par exemple environ 200 V DC en tension moyenne.

Les conducteurs 20, 21 et 22 sont reliés à une extrémité par un connecteur à fiches 60 à un système électronique d'alimentation 30 lui-même connecté au réseau, par exemple 230 V AC comme illustré, mais d'autres tensions de réseau sont possibles, par exemple 110V AC, ou des tensions continues telles que 24V DC.

Le ruban 10 peut présenter le même type de connecteur, mâle ou femelle, à l'autre extrémité, de manière à permettre le branchement les uns à la suite des autres de plusieurs rubans.

Le système électronique d'alimentation 30 est agencé pour alimenter sélectivement un ou plusieurs des bus selon le mode de fonctionnement recherché.

Dans l'exemple considéré, dans un premier mode de fonctionnement, correspondant à l'éclairage maximal, les bus d'alimentation 20, 21 d'une part, et 20, 22 d'autre part, sont alimentés, par exemple sous une même tension continue redressée double alternance.

Le bus 20 est par exemple relié au - et les bus 21 et 22 reliés au +, en sortie d'un pont de diodes servant à produire la tension DC d'alimentation. Tous les modules 11 à 14 sont allumés.

Le deuxième mode de fonctionnement correspond à l'alimentation par une source électrique de secours 40, comportant par exemple une batterie électrique et un onduleur associé, le cas échéant.

Le passage à ce deuxième mode de fonctionnement a lieu par exemple en cas de coupure du réseau.

Le système d'alimentation 30 est agencé pour n'alimenter que le bus 20, 21 dans ce deuxième mode de fonctionnement, de sorte que seuls les modules 11 sont allumés le long du ruban.

La consommation électrique du ruban est alors réduite, et ce dernier fournit un éclairage minimal.

Le système d'alimentation 30 comporte par exemple un relais électromécanique qui est alimenté par le réseau 230 V AC et qui lorsqu'alimenté assure la connexion de tous les bus 20, 21 et 22 au pont redresseur. En cas de coupure du réseau, ce relais passe dans un état de repos où il assure la connexion du seul bus 20, 21 à la source de secours 40.

Le système d'alimentation 30 peut encore passer, dans un exemple de mise en œuvre de l'invention, dans un mode de fonctionnement où seul le bus 20, 21 est alimenté, mais par le réseau au lieu de la source de secours.

Le passage dans ce mode de fonctionnement a lieu par exemple dans certaines circonstances où le réseau est présent mais où le besoin en éclairage est plus faible, par exemple en raison de l'absence de personnel sur le site éclairé par le ruban.

Le système d'alimentation 30 peut recevoir un signal de commande d'un détecteur 80 qui est sensible à la présence de personnes dans un périmètre donné ; si personne n'est détecté, le système passe en éclairage réduit ; en cas de présence humaine, il repasse en mode d'éclairage normal.

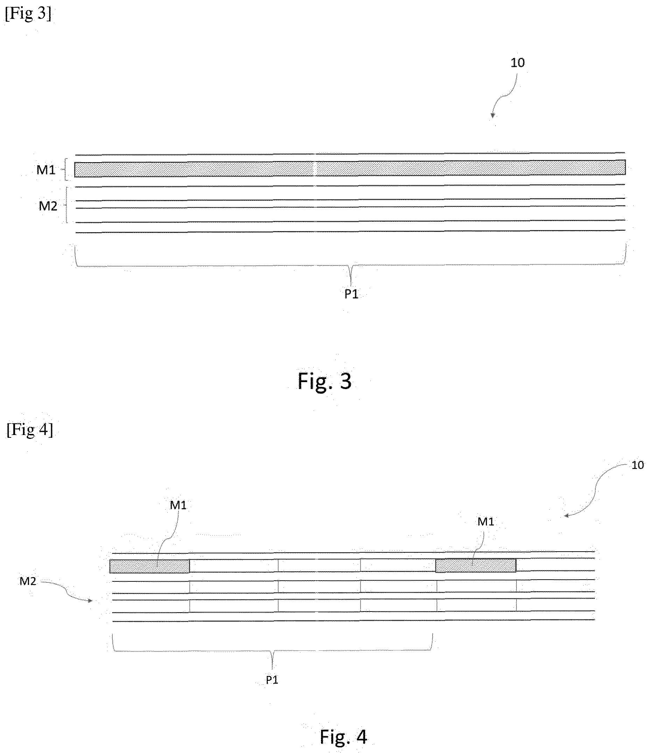

La disposition des modules sur le ruban peut être autre, et chaque module peut correspondre par exemple à une rangée de diodes LED, toutes les rangées s'étendant en parallèle le long du ruban, comme illustré sur la figure 3.

Sur cette figure, le ruban comporte un sous-ensemble M1 de modules correspondant à une rangée de diodes LED s'étendant sur toute la longueur du ruban, le reste des diodes LED formant un deuxième sous-ensemble M2 de modules. En éclairage réduit, seule la rangée correspondant au sous-ensemble M1 est allumée. Lorsque l'éclairage est maximal, toutes les rangées sont alimentées.

On peut encore avoir, comme illustré à la figure 4, une disposition des diodes LED sous formes de plusieurs rangées, trois par exemple, appartenant à des ensembles P1, P2, ... qui se répètent le long du ruban, le regroupement des diodes LED au sein du ruban sous forme de sous-ensembles de modules commandés par des bus d'alimentation respectifs étant tel qu'en éclairage réduit, seulement une partie des rangées et sur seulement une partie de la longueur de chaque ensemble est allumée. Dans l'exemple illustré à la figure 4, seulement les sous-ensembles M1 au sein des ensembles P1, P2, ...de modules qui se répètent le long du ruban est allumé en éclairage réduit.

Le nombre de modules au sein d'un ensemble Pk de modules peut être encore différent, de même que le nombre de modules de chaque sous-ensemble, le nombre de sous-ensembles, et le nombre d'ensembles.

## Revendications

1. Système d'éclairage (1) à diodes LED (52), comportant :
- au moins un ruban (10) d'éclairage à diodes LED, avec au moins un ensemble (P1; P2 ; ...) de modules à diodes LED, les modules d'un ensemble se répartissant en sous-ensembles (M1 ; M2 ;...) d'un ou plusieurs modules (11 ; 12, 13, 14) alimentés par des bus d'alimentation respectifs,
- un système électronique (30) d'alimentation du ruban, permettant de mettre sous tension selon un premier mode de fonctionnement tous les bus d'alimentation (20, 21 ; 20, 22) et dans un second mode de fonctionnement une partie seulement (20, 21) des bus d'alimentation, de manière à réduire la consommation électrique du ruban, **caractérisé en ce que** le ruban comporte un connecteur rapide à au moins trois conducteurs, dont un conducteur commun (20) et au moins deux conducteurs (21, 22) spécifiques à des sous-ensembles respectifs (M1, M2) de modules, les conducteurs (20, 21, 22) étant reliés à une extrémité par le connecteur rapide au système électronique d'alimentation (30) lui-même connecté à un réseau d'alimentation.

2. Système selon la revendication 1, chaque ensemble de modules comportant un premier module (11) alimenté par un bus d'alimentation respectif (20, 21) et au moins un autre module (12, 13, 14) alimenté par un autre bus d'alimentation (20, 22), le système électronique d'alimentation (30) étant agencé pour n'alimenter que le bus d'alimentation respectif (20, 21) dans le deuxième mode de fonctionnement.

3. Système selon la revendication 2, l'ensemble de modules comportant le premier module (11) alimenté par le bus d'alimentation respectif et tous les autres modules (12, 13, 14) de l'ensemble étant alimentés par l'autre bus d'alimentation.

4. Système selon la revendication 3, le système électronique d'alimentation (30) étant alimenté en tension redressée AC double- alternance.

5. Système selon l'une quelconque des revendications précédentes, le conducteur commun (20) étant relié à un pôle négatif du système électronique d'alimentation (30) et les autres conducteurs (21, 22) étant reliés à l'autre pôle positif du système électronique d'alimentation (30) en sortie d'un pont de diodes servant à produire la tension DC d'alimentation des bus.

6. Système selon l'une quelconque des revendications précédentes, chaque ensemble (P1 ; P2 ; ...) de modules comportant entre 2 et 20 modules, mieux entre 2 et 10 modules, encore mieux entre 2 et 5 modules.

7. Système selon l'une quelconque des revendications précédentes, chaque module (11 ; 12 ; 13 ; 14) comportant entre 30 et 100 diodes LED.

8. Système selon l'une quelconque des revendications précédentes, les modules (11, 12, 13, 14) d'un même ensemble (P1 ; P2 ; ...) étant disposés les uns à la suite des autres le long du ruban.

9. Système selon l'une quelconque des revendications précédentes, comportant au moins un capteur (80) de présence humaine, et le passage du premier mode de fonctionnement au second et inversement s'effectuant également selon qu'une présence humaine est détectée ou non.

10. Système selon l'une quelconque des revendications précédentes, le ruban d'éclairage (10) comportant :
- une enveloppe souple (50),
- l'au moins un ensemble (P1 ; P2, ...) de modules à diodes LED disposés à l'intérieur de l'enveloppe souple, notamment se répétant le long de celle-ci, les modules d'un ensemble se répartissant en sous-ensembles (M1, M2) d'un ou plusieurs modules (11 ; 12, 13, 14) alimentés par N bus d'alimentation respectifs (20, 21 ; 20, 22),
- le connecteur rapide ayant au moins N-1 pôles, permettant d'alimenter sélectivement lesdits bus.

11. Procédé d'éclairage d'un ouvrage, notamment d'un tunnel, dans lequel on utilise un système (1) selon l'une quelconque des revendications 1 à 10, en alimentant de manière simultanée tous les modules (11, 12, 13, 14) à partir du réseau pour éclairer de manière maximale l'ouvrage, et en alimentant seulement une partie (11) d'entre eux en cas de coupure du réseau ou lorsque le besoin en lumière est moindre.

## Patentansprüche

1. Beleuchtungssystem (1) mit LED-Dioden (52), umfassend:
- mindestens einen Beleuchtungsstreifen (10) mit LED-Dioden mit mindestens einer Menge (P1; P2; ...) von Modulen mit LED-Dioden, wobei sich die Module einer Menge auf Teilmengen (M1; M2;...) mit einem oder mehreren Modulen (11; 12, 13, 14) verteilen, die über jeweilige Versorgungsbusse versorgt werden,
- ein elektronisches Versorgungssystem (30) des Streifens, das es ermöglicht, in einer ersten Betriebsart alle Versorgungsbusse (20, 21; 20, 22) und in einer zweiten Betriebsart nur einen Teil (20, 21) der Versorgungsbusse an Spannung zu legen, so dass der Stromverbrauch des Streifens reduziert wird, **dadurch gekennzeichnet, dass** der Streifen einen Schnellverbinder mit mindestens drei Leitern umfasst, darunter ein gemeinsamer Leiter (20) und mindestens zwei spezifische Leiter (21, 22) für jeweilige Teilmengen (M1, M2) von Modulen, wobei die Leiter (20, 21, 22) an einem Ende durch den Schnellverbinder mit dem elektronischen Versorgungssystem (30) verbunden sind, das wiederum mit einem Versorgungsnetz verbunden ist.

2. System nach Anspruch 1, wobei jede Menge von Modulen ein erstes Modul (11), das durch einen jeweiligen Versorgungsbus (20, 21) versorgt wird, und mindestens ein weiteres Modul (12, 13, 14), das durch einen anderen Versorgungsbus (20, 22) versorgt wird, umfasst, wobei das elektronische Versorgungssystem (30) dazu ausgebildet ist, in der zweiten Betriebsart nur den jeweiligen Versorgungsbus (20, 21) zu versorgen.

3. System nach Anspruch 2, wobei die Menge von Modulen das erste Modul (11) umfasst, das durch den jeweiligen Versorgungsbus versorgt wird, und wobei alle anderen Module (12, 13, 14) der Menge durch den anderen Versorgungsbus versorgt werden.

4. System nach Anspruch 3, wobei das elektronische Versorgungssystem (30) mit einer vollwellengleichgerichteten Wechselspannung versorgt wird.

5. System nach einem der vorhergehenden Ansprüche, wobei der gemeinsame Leiter (20) mit einem Minuspol des elektronischen Versorgungssystems (30) verbunden ist und wobei die anderen Leitern (21, 22) mit dem anderen Pluspol des elektronischen Versorgungssystems (30) im Ausgang einer Diodenbrücke verbunden sind, die dazu dient, die Versorgungsgleichspannung für die Busse zu erzeugen.

6. System nach einem der vorhergehenden Ansprüche, wobei jede Menge (P1; P2; ...) von Modulen zwischen 2 und 20 Module, besser zwischen 2 und 10 Module, noch besser zwischen 2 und 5 Module umfasst.

7. System nach einem der vorhergehenden Ansprüche, wobei jedes Modul (11; 12; 13; 14) zwischen 30 und 100 LED-Dioden umfasst.

8. System nach einem der vorhergehenden Ansprüche, wobei die Module (11, 12, 13, 14) einer selben Menge (P1; P2; ...) entlang des Streifens hintereinander angeordnet sind.

9. System nach einem der vorhergehenden Ansprüche, das mindestens einen Sensor (80) für menschliche Anwesenheit umfasst und bei dem der Übergang von der ersten Betriebsart zur zweiten und umgekehrt ebenfalls je nachdem, ob eine menschliche Anwesenheit detektiert wird oder nicht, erfolgt.

10. System nach einem der vorhergehenden Ansprüche, wobei der Beleuchtungsstreifen (10) umfasst:
- eine flexible Hülle (50),
- die mindestens eine Menge (P1; P2, ...) von Modulen mit LED-Dioden, die im Inneren der flexiblen Hülle angeordnet sind, wobei sie sich insbesondere entlang von dieser wiederholen, wobei sich die Module einer Menge auf Teilmengen (M1, M2) mit einem oder mehreren Modulen (11; 12, 13, 14) verteilen, die durch N jeweilige Versorgungsbusse (20, 21; 20, 22) versorgt werden,
- wobei der Schnellverbinder mindestens N-1 Pole hat, die es ermöglichen, die Busse selektiv zu versorgen.

11. Verfahren zur Beleuchtung eines Bauwerks, insbesondere eines Tunnels, bei dem ein System (1) nach einem der Ansprüche 1 bis 10 verwendet wird, wobei alle Module (11, 12, 13, 14) gleichzeitig aus dem Netz versorgt werden, um das Bauwerk maximal zu beleuchten, und wobei bei einer Unterbrechung des Netzes oder bei geringerem Lichtbedarf nur ein Teil (11) von ihnen versorgt wird.

## Claims

1. Lighting system (1) with LED diodes (52), comprising:
- at least one strip (10) of lighting with LED diodes, with at least one set (P1; P2; ...) of LED diode modules, the modules of a set being divided up into subsets (M1; M2; ...) of one or more modules (11; 12, 13, 14) supplied with power by respective power supply buses,
- an electronic system (30) for supplying power to the strip making it possible to power up, according to a first mode of operation, all the power supply buses (20, 21; 20, 22) and, in a second mode of operation, only some (20, 21) of the power supply buses, so as to reduce the electrical consumption of the strip, **characterized in that** the strip comprises a quick connector to at least three conductors, including a common conductor (20) and at least two conductors (21, 22) specific to respective subsets (M1, M2) of modules, the conductors (20, 21, 22) being linked at one end by the quick connector to the electronic power supply system (30) which is itself connected to a mains power supply.

2. System according to Claim 1, each set of modules comprising a first module (11) supplied with power by a respective power supply bus (20, 21) and at least one other module (12, 13, 14) supplied with power by another power supply bus (20, 22), the electronic power supply system (30) being designed to supply power only to the respective power supply bus (20, 21) in the second mode of operation.

3. System according to Claim 2, the set of modules comprising the first module (11) supplied with power by the respective power supply bus and all the other modules (12, 13, 14) of the set being supplied with power by the other power supply bus.

4. System according to Claim 3, the electronic power supply system (30) being supplied with double-alternating rectified AC voltage.

5. System according to any one of the preceding claims, the common conductor (20) being connected to a negative pole of the electronic power supply system (30) and the other conductors (21, 22) being connected to the other positive pole of the electronic power supply system (30) at the output of a diode bridge used to produce the DC voltage for supplying power to the buses.

6. System according to any one of the preceding claims, each set (P1; P2; ...) of modules comprising between 2 and 20 modules, better between 2 and 10 modules, even better between 2 and 5 modules.

7. System according to any one of the preceding claims, each module (11; 12; 13; 14) comprising between 30 and 100 LED diodes.

8. System according to any one of the preceding claims, the modules (11, 12, 13, 14) of one and the same set (P1; P2; ...) being disposed one after the other along the strip.

9. System according to any one of the preceding claims, comprising at least one human presence sensor (80), and the switch from the first mode of operation to the second and vice versa being made also according to whether or not a human presence is detected.

10. System according to any one of the preceding claims, the lighting strip (10) comprising:
- a flexible jacket (50),
- the at least one set (P1; P2, ...) of LED diode modules disposed inside the flexible jacket, notably being repeated along the latter, the modules of a set being divided up into subsets (M1, M2) of one or more modules (11; 12, 13, 14) supplied with power by N respective power supply buses (20, 21; 20, 22),
- the quick connector having at least N-1 poles, making it possible to selectively supply power to said buses.

11. Method for lighting a work, notably a tunnel, in which a system (1) according to any one of Claims 1 to 10 is used, by simultaneously supplying power to all the modules (11, 12, 13, 14) from the mains to maximally light the work, and by supplying power to only some (11) of them in the case of a mains outage or when there is a lesser need for light.
